# EUROPEAN PATENT APPLICATION

(11) **EP 4 790 753 A1**
(43) Date of publication of application: **12.08.2026**
(21) Application number: 26150795.8
(22) Date of filing: 08.01.2026
(51) Int. Cl.: H01M 4/04, H01M 4/13, H01M 50/474, H01M 50/586, H01M 50/595, H01M 4/139, H01M 4/66

(54) **ELECTRODE PLATE AND METHOD FOR MANUFACTURING THE ELECTRODE PLATE**

(30) Priority: 07.02.2025 JP 2025019279
(71) Applicant: Prime Planet Energy & Solutions, Inc., Chuo-ku, Tokyo 103-0022 (JP)
(72) Inventor: MASUZAWA, Naoki, Tokyo,, 103-0022 (JP)
(74) Representative: Kuhnen & Wacker Patent- und Rechtsanwaltsbüro PartG mbB

(57) **Abstract**

An electrode plate (5P) includes a current collecting foil (SPF), a conductive bonding layer (5PY) provided on the electrode foil (5PF), an active material layer (SPA) provided on the bonding layer (5PY) and bonded to the bonding layer (5PY), and an insulating protective layer (SPX) provided along the bonding layer (5PY) and the active material layer (5PA) and between an electrode foil exposed portion (5PC) of the electrode foil (SPF), where the electrode foil (5PF) is exposed, and the bonding layer (5PY). The insulating protective layer (SPX) is thinner than the bonding layer (SPY).

## Description

### BACKGROUND

### Technical field

The disclosure relates to an electrode plate and a method for manufacturing the electrode plate.

### Related Art

As an electrode plate for a power storage device, for example, an electrode plate configured such that a part of an electrode foil is exposed, while an active material layer formed of a dry film is press-bonded onto the electrode foil via a conductive bonding layer provided on another part of the electrode foil, is conventionally known (see Patent Document 1).

### Patent Documents

Patent Document 1: Japanese unexamined patent application publication No. 2023-103999 (JP 2023-103999 A)

### SUMMARY

### Technical Problems

Meanwhile, in some cases, it may be necessary to manufacture the above-mentioned electrode plate by providing an insulating protective layer made of insulating ceramic powder or the like on the electrode foil, between the exposed portion of the electrode foil and the bonding layer, and thereafter, press-bonding the active material layer to the electrode foil via the bonding layer. This is to avoid following possible defects when the exposed portion of the electrode foil is bent for the purpose of current collection or the like. Specifically, this bending may cause a portion of the exposed portion of the electrode foil, located adjacent to the active material layer, to strongly contact the corner of an edge portion of the opposite electrode facing that portion through a separator, and further pierce through the separator, thereby causing the edge portion of the opposite electrode to contact the portion of the exposed portion of the electrode foil adjacent to the active material layer, resulting in a large flow of short-circuit currents. Furthermore, the insulating protective layer also prevents defects such as a large flow of short-circuit currents occurring when burrs formed at the edge portion of an electrode foil of the opposite electrode pierce through the separator and contact the portion of the exposed portion of the electrode foil adjacent to the active material layer.

However, in the electrode plate provided with the insulating protective layer as above, the active material layer may be formed by bonding to the bonding layer and partially protruding beyond the bonding layer onto the insulating protective layer. In this case, if the insulating protective layer is formed thicker than the bonding layer, when the active material layer is thermally press-bonded to the bonding layer, concentrative pressure is applied at or around the boundary between the insulating protective layer and the bonding layer, specifically, at an overlapping area where the protruding portion of the active material layer overlaps the relatively thick insulating protective layer. In contrast, insufficient pressure is applied at an overlapping area where the active material layer overlaps the relatively thin bonding layer, resulting in insufficient electrical conduction in this area between the active material layer and the electrode foil via the conductive bonding layer. Consequently, non-uniform battery reactions may occur in the active material layer bonded to the bonding layer.

The disclosure has been made to address the above problems and has a purpose to provide an electrode plate including a bonding layer and an insulating protective layer on an electrode foil, in which an active material layer is bonded well to the entire bonding layer even if the active material layer extends above the insulating protective layer. Further, another purpose is to provide a method for manufacturing the electrode plate.

### Means of Solving the Problems

(1) To achieve the above-mentioned purpose, one aspect of the disclosure provides an electrode plate comprising: an electrode foil; a bonding layer having an electric conductivity and being provided on the electrode foil; an active material layer provided on the bonding layer and bonded to the bonding layer; and an insulating protective layer provided on the electrode foil and extended along the bonding layer and the active material layer between an electrode-foil exposed portion of the electrode foil, where the electrode foil is exposed, and the bonding layer, wherein the insulating protective layer is thinner than the bonding layer.
   The above-described electrode plate includes the bonding layer and the active material layer bonded to this bonding layer, and further the insulating protective layer provided along the bonding layer and the active material layer on the electrode foil. Therefore, when the electrode body is formed using this electrode plate, the foregoing insulating protective layer can suppress the occurrence of short circuits caused by burrs of the electrode foil of an opposite electrode, which are generated on the corner of an edge portion or the edge portion of the opposite electrode and pierce through the separator, contacting the electrode foil of the electrode plate. In addition, the insulating protective layer is made thinner than the bonding layer. Accordingly, even if the active material layer bonded to the bonding layer extends above the insulating protective layer, the sum of the thicknesses of the insulating protective layer and the active material layer is less than the sum of the thicknesses of the bonding layer and the active material layer. Consequently, appropriate pressure can be applied to a part of the active material layer, which is located on the bonding layer. This ensures that the entire active material layer located on the bonding layer is tightly attached to the bonding layer, reducing the possibility of causing non-uniform battery reactions.
   The electrode foil may include, for example, metal foils, such as aluminum foils and copper foils. The active material particles for the active material layer may include, for example, lithium ion transition metal composite oxide particles, such as lithium nickel cobalt manganese composite oxide particles, and carbon-based particles, such as graphite, carbon black such as acetylene black, graphitizable carbon, non-graphitizable carbon, and carbon nanotubes, and silicon-based particles. The conductive particles contained in the bonding layer may include acetylene black, for example. Further, the thermoplastic resin for the bonding layer may include, for example, polyvinylidene fluoride (PVDF) and polytetrafluoroethylene (PTFE). The insulating ceramic powders for the insulating protective layer may include, for example, alumina, magnesia, and silica. The thermoplastic resins for the insulating protective layer may include, for example, polyvinylidene fluoride and polytetrafluoroethylene.
   The electrode plate may include, for example, a positive electrode plate and a negative electrode plate, each of which includes non-metallic active material layers on both sides of an electrode foil, and further an electrode plate for bipolar secondary batteries, including a positive active material layer on one side of an electrode foil and a negative active material layer on the other side. The power storage device utilizing such electrode plates may include a secondary battery, such as lithium-ion secondary battery, which uses ions of alkali metals, such as Li, Na, and K, as charge carriers, and also may include capacitors, such as lithium-ion capacitors.
(2) In the electrode plate described in (1), the active material layer may be formed of a self-supported active material sheet.
(3) Another aspect of the disclosure provides a method for manufacturing the electrode plate described in (1) or (2), characterized in that the method comprises: thermally press-bonding a strip-shaped active material layer while placing this strip-shaped active material layer on a strip-shaped bonding layer of a bonding-layer-coated strip-shaped electrode foil to form a strip-shaped electrode plate in which the strip-shaped active material layer is bonded to the strip-shaped bonding layer, the bonding-layer-coated strip-shaped electrode foil including: the strip-shaped bonding layer; a pair of strip-shaped insulating protective layers formed on both outer sides of the strip-shaped bonding layer in a width direction so that the pair of strip-shaped insulating protective layers is thinner than the strip-shaped bonding layer, and a strip-shaped exposed portion remains exposed in a strip shape on the strip-shaped electrode foil.
(4) The method described in (3) may further include: prior to thermally press-bonding the strip-shaped active material layer, applying a bonding layer paste in a strip shape on the strip-shaped electrode foil to form an undried strip-shaped bonding layer that forms the strip-shaped bonding layer after drying, and simultaneously, or subsequently, or prior to applying a protective layer paste in a strip shape to form an undried strip-shaped protective layers that form the strip-shaped insulating protective layers after drying, along the undried strip-shaped bonding layer, while the strip-shaped exposed portion remains exposed, wherein the undried strip-shaped bonding layer and the undried strip-shaped protective layers are formed so that the strip-shaped insulating protective layers are thinner than the strip-shaped bonding layer; and drying the undried strip-shaped bonding layer and the undried strip-shaped protective layers to form the bonding-layer-coated strip-shaped electrode foil including the strip-shaped bonding layer and the strip-shaped insulating protective layers each being thinner than the strip-shaped bonding layer.
(5) The method described in (4) may be configured such that the bonding-layer-coated strip-shaped electrode foil includes: a first strip-shaped bonding layer that is the strip-shaped bonding layer and first strip-shaped insulating protective layers that are the strip-shaped insulating protective layers, on a first surface of the strip-shaped electrode foil; and a second strip-shaped bonding layer that is the strip-shaped bonding layer and second strip-shaped insulating protective layers that are the strip-shaped insulating protective layers, on a second surface of the strip-shaped electrode foil, which is a back surface opposite the first surface, and thermally press-bonding the strip-shaped active material layer includes simultaneously thermally press-bonding the strip-shaped active material layer to form the strip-shaped electrode plate by: placing a first strip-shaped active material layer that is the strip-shaped active material layer onto the first strip-shaped bonding layer of the bonding-layer-coated strip-shaped electrode foil, placing a second strip-shaped active material layer that is the strip-shaped active material layer onto the second strip-shaped bonding layer, thermally press-bonding the first strip-shaped active material layer to the first strip-shaped bonding layer, and simultaneously, thermally press-bonding the second strip-shaped active material layer to the second strip-shaped bonding layer, so that the first strip-shaped active material layer is bonded to the first strip-shaped bonding layer and the second strip-shaped active material layer is bonded to the second strip-shaped bonding layer.

### BRIEF DESCRIPTION OF THE DRAWINGS

FIG. 1 is a partial broken-out cross-sectional view of a battery in which an electrode body includes a positive electrode plate according to an embodiment;
FIG. 2 is an explanatory diagram showing the configuration of the electrode body including the positive electrode plate in the embodiment;
FIG. 3 is a cross-sectional view of the positive electrode plate, taken along a line A-A in FIG. 2 in the embodiment;
FIG. 4 is a flowchart showing a method for manufacturing the positive electrode plate in the embodiment;
FIG. 5 is an explanatory diagram showing the whole structure of a manufacturing equipment used in the method for manufacturing the positive electrode plate in the embodiment; and
FIG. 6 is a cross-sectional view of a strip-shaped positive electrode foil, taken along a line B-B in FIG. 5 in the embodiment.

### DETAILED DESCRIPTION OF THE EXEMPLARY EMBODIMENTS

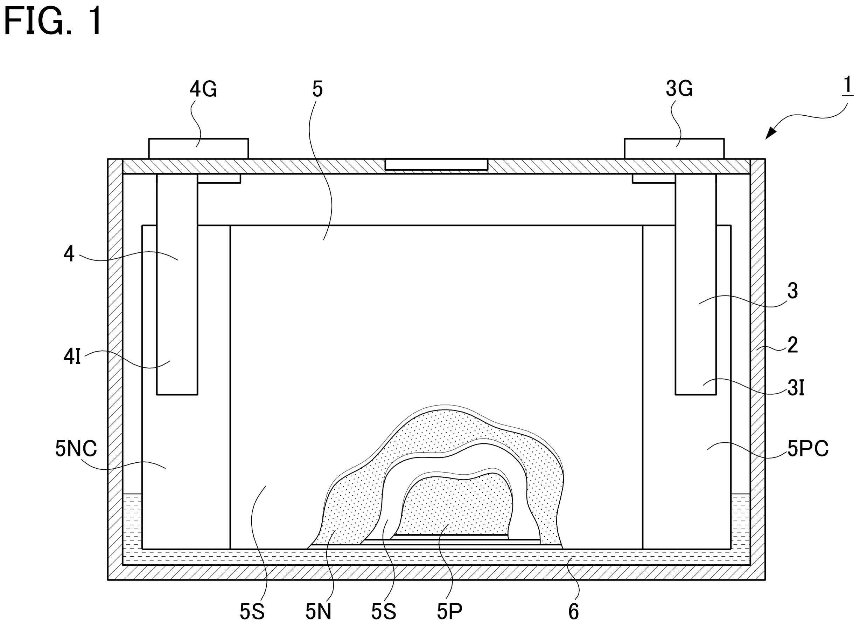

A detailed description of a battery 1 (one example of a power storage device) provided with a positive electrode plate 5P according to an embodiment of the disclosure will be given referring to FIG. 1, FIG. 2, and FIG. 3. This battery 1 is a prismatic, sealed lithium-ion secondary battery, which can be mounted in vehicles, such as hybrid cars, plug-in hybrid cars, and electric cars, and various kinds of devices.

The battery 1 includes a battery case 2, an electrode body 5 housed in the battery case 2, a positive terminal 3 and a negative terminal 4, which are fixed to the battery case 2, and insulation members (not shown) that insulate between the battery case 2 and the terminals 3 and 4. The battery case 2 is made of metal (in the present embodiment, made of aluminum), and has a rectangular parallelepiped box-like shape. The electrode body 5 is covered with a pouch-shaped insulating film not shown. The battery case 2 internally contains an electrolyte 6, a part of which is impregnated in the electrode body 5 and the remainder stays on the bottom of the battery case 2.

The positive terminal 3 is formed of an aluminum plate having a strip shape. An inner connecting portion 3I, forming one end of the positive terminal 3, is connected to a positive current collecting part 5PC of a positive electrode plate 5P (mentioned later) constituting the electrode body 5, where a positive current collecting foil 5PF is exposed. In contrast, the other end of the positive terminal 3 extends out of the battery case 2, forming a positive outer terminal portion 3G.

The negative terminal 4 is formed of a copper plate having a strip shape. An inner connecting portion 4I, forming one end of the negative terminal 4, is connected to a negative current collecting part 5NC of a negative electrode plate 5N (mentioned later) constituting the electrode body 5. In contrast, the other end of the negative terminal 4 extends out of the battery case 2, forming a negative outer terminal portion 4G.

The electrolyte 6 is a non-aqueous electrolyte containing organic solvent and fluorine. In the present embodiment, the organic solvent is an organic solvent prepared by mixing ethylene carbonate, ethyl methyl carbonate, and dimethyl carbonate. Further, LiPF₆ is used as the fluorine-containing lithium salt.

The electrode body 5 housed in the battery case 2 is a so-called flat wound electrode body, including a strip-shaped positive electrode plate 5P and a strip-shaped negative electrode plate 5N, which are wound by alternately interposing two strip-shaped separators 5S, and pressed into a flat shape in a direction perpendicular to the drawing sheet of FIG. 1.

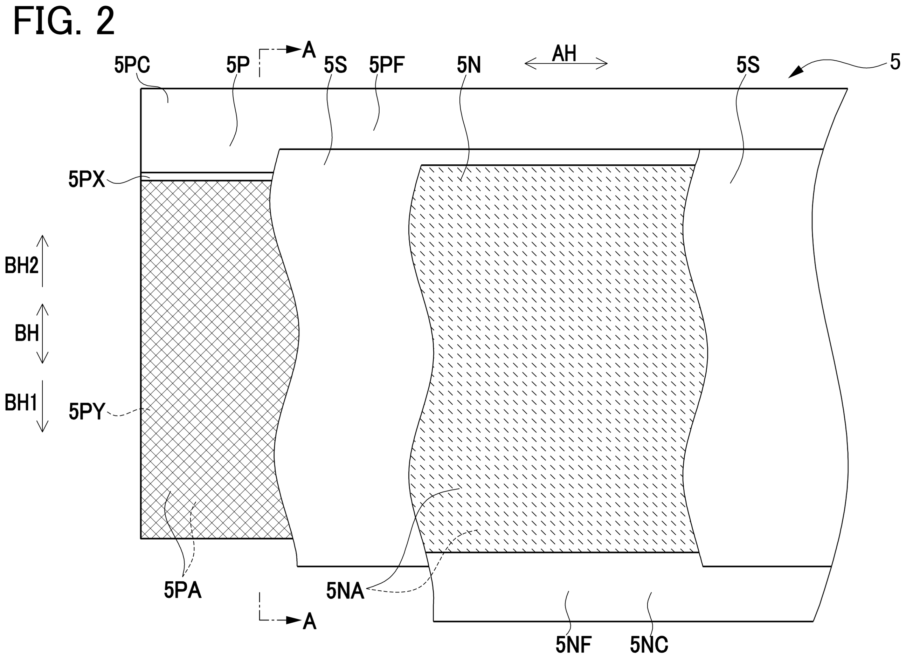

In the electrode body 5, the negative electrode plate 5N, having a long strip shape extending in a longitudinal direction AH, includes a strip-shaped negative current collecting foil 5NF formed of a copper foil and strip-shaped negative active material layers 5NA provided on both surfaces of this foil 5NF (see FIG. 2). The negative active material layers 5NA are each made of negative active material particles and a binder, which are not shown. In the present embodiment, graphite particles are used as the negative active material particles. An edge portion of the strip-shaped negative electrode plate 5N on one side BH1 in a width direction BH, i.e., on the lower side in FIG. 2, forms a strip-shaped negative current collecting part 5NC long in the longitudinal direction AH, in which the negative active material layers 5NA are not provided on the negative current collecting foil 5NF, and the negative current collecting foil 5NF is thus exposed.

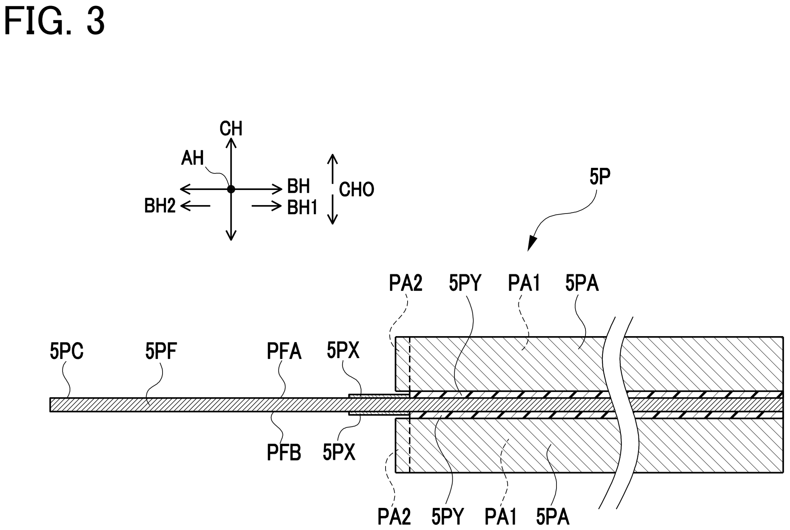

In contrast, the strip-shaped positive electrode plate 5P long in the longitudinal direction AH includes a strip-shaped positive current collecting foil 5PF formed of an aluminum foil and positive active material layers 5PA, and further includes strip-shaped insulating protective layers 5PX and bonding layers 5PY, as shown in FIG. 2 and FIG. 3. An edge portion of the positive electrode plate 5P on the other side BH2 in the width direction BH, i.e., on the upper side in FIG. 2 and the left side in FIG. 3, forms a strip-shaped positive current collecting part 5PC long in the longitudinal direction AH, in which the positive active material layers 5PA are not provided on the positive current collecting foil 5PF, and the positive current collecting foil 5PF is thus exposed. Further, the insulating protective layers 5PX are each provided along the corresponding bonding layer 5PY between the positive current collecting part 5PC and the bonding layer 5PY. In the present embodiment, more specifically, the insulating protective layers 5PX are each provided in contact with the corresponding bonding layer 5PY.

The positive active material layers 5PA contain positive active material particles, conductive particles, and a binder composed of fibrillated PTFE. Each positive active material layer 5PA is formed of a so-called self-supported positive active material sheet SH, which exists independently and can be handled alone. This positive active material sheet SH is a known "dry-type" active material sheet, which is manufactured without using a solvent, and has a layer thickness of, for example, 80 µm.

As shown in FIG. 3, in the positive electrode plate 5P in the present embodiment, each positive active material layer 5PA includes a first portion PA1 that overlaps the bonding layer 5PY from the outside CHO in a thickness direction CH (i.e., in the vertical direction in FIG. 3). In addition, each positive active material layer 5PA may be formed with a second portion PA2 that does not overlap the bonding layer 5PY and extends, i.e., protrudes, to the space above an insulating protective layer 5PX mentioned later to overlap the insulating protective layer 5PX from the outside CHO in the thickness direction CH. In this case, as shown in FIG. 3, the first portions PA1 of the positive active material layers 5PA are electrically connected to the positive current collecting foil 5PF located directly under the first portions PA1 via the conductive bonding layers 5PY containing the conductive particles. In contrast, the second portions PA2 overlapping the insulating protective layers 5PX are not electrically connected to the positive current collecting foil 5PF located directly under the second portions PA2. Thus, the first portions PA1 can contribute to charging and discharging reactions of the battery 1, whereas the second portions PA2 cannot contribute to the charging and discharging reactions of the battery 1.

The bonding layers 5PY bond the positive active material layers 5PA to the positive current collecting foil 5PF. The bonding layers 5PY contain conductive particles made of acetylene black and thermoplastic resin made of PVDF. As shown in FIG. 3, the bonding layers 5PY are layers individually formed on the first surface PFA and the second surface PFB of the positive current collecting foil 5PF and extended in the longitudinal direction AH, i.e., in the direction perpendicular to the drawing sheet of FIG. 3. In the present embodiment, each bonding layer 5PY has a thickness of 6 µm in the thickness direction CH.

Each of the insulating protective layers 5PX is a layer for suppressing burrs or the like generated at the corner of the negative active material layer 5NA and the negative current collecting foil 5NF of the negative electrode plate 5N adjacent to the insulating protective layer 5PX via the separator 5S from piercing through the separator 5S and contacting with the positive current collecting foil 5PF in order to prevent the occurrence of short-circuits causing a high current flow. Each insulating protective layer 5PX contains insulating ceramic powder made of alumina and thermoplastic resin made of PVDF. In the present embodiment, each insulating protective layer 5PX has a thickness of 3 µm in the thickness direction CH, which is thinner than the thickness of the bonding layer 5PY. Further, the insulating protective layer 5PX overlaps the second portion PA2 of the corresponding positive active material layer 5PA in the thickness direction CH, as described above.

Accordingly, in the electrode body 5 made up of the positive electrode plate 5P in the present embodiment, the insulating protective layer 5PX can suppress burrs or the like at the corners of the negative current collecting part 5NC and the negative current collecting foil 5NF of the negative electrode plate 5N from penetrating through the separator 5S into contact with the positive current collecting foil 5PF of the positive electrode plate 5P, causing short circuits. In addition, even when the positive active material layer 5PA bonded to the bonding layer 5PY protrudes out above the insulating protective layer 5PX, the sum of the thicknesses of the insulating protective layer 5PX and the positive active material layer 5PA (i.e., the second portion PA2) is smaller than the sum of the thicknesses of the bonding layer 5PY and the positive active material layer 5PA (i.e., the first portion PA1). Thus, the positive active material layer 5PA (i.e., the first portion PA1) overlapping the bonding layer 5PY can be subjected to appropriate pressure over its entire surface without being affected by the protruding portion (i.e., the second portion PA2 of the positive active material layer SPA). Therefore, the entire first portion PA1 of the positive active material layer 5PA tightly adheres to the bonding layer 5PY and less causes non-uniform battery reactions to occur therein. The above description shows the configuration on the upper side of the strip-shaped positive current collecting part 5PC, but the opposite, lower side thereof has the same configuration.

Since the positive electrode plate 5P includes the positive active material layers 5PA, which are each formed of the self-supported positive active material sheet SH, they can be easily bonded to the positive current collecting foil 5PF via the bonding layers 5PY, enabling a low-cost formation of the positive electrode plate 5P.

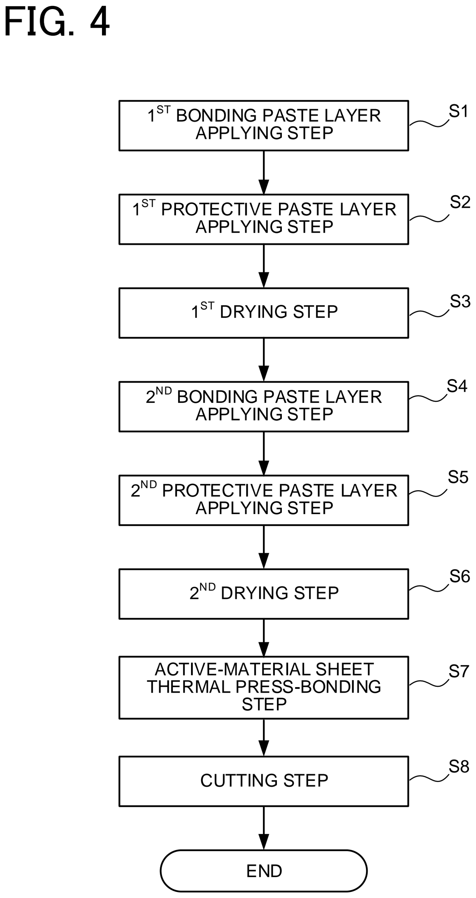

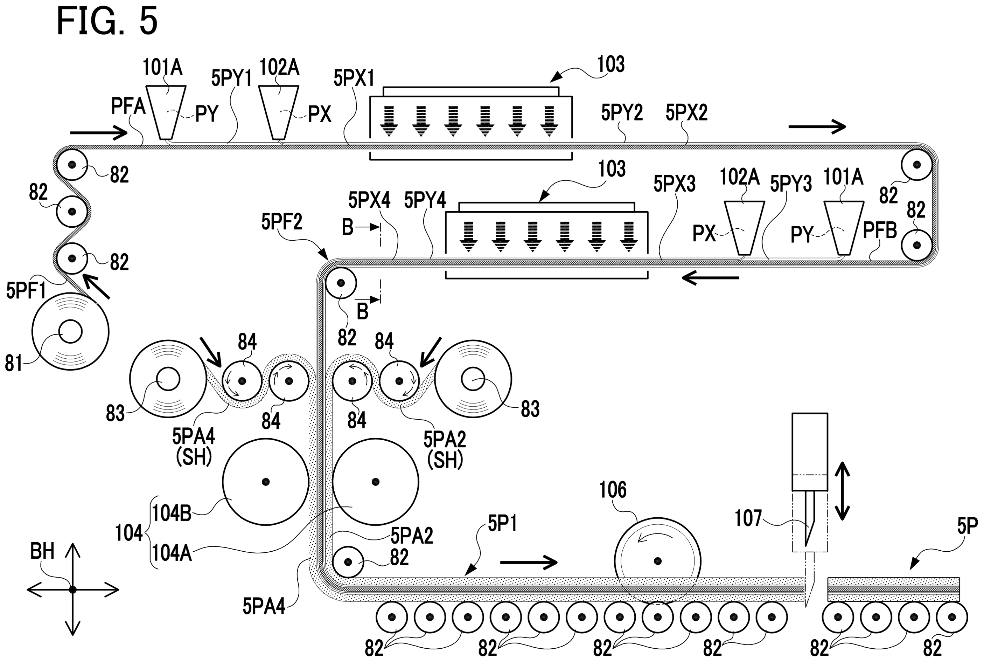

As shown in FIG. 4 and FIG. 5, the method for manufacturing the positive electrode plate 5P according to the present embodiment includes a step S1 of applying a first bonding paste layer (a "first bonding paste layer applying step S1"), a step S2 of applying a first protective paste layer (a "first protective paste layer applying step S2"), and a first drying step S3. This method further includes a step S4 of applying a second bonding paste layer (a "second bonding paste layer applying step S4"), a step S5 of applying a second protective paste layer (a "second protective paste layer applying step S5"), and a second drying step S6. The method still further includes a step S7 of thermally press-bonding an active-material sheet (an "active-material sheet thermal press-bonding step S7") and a cutting step S8.

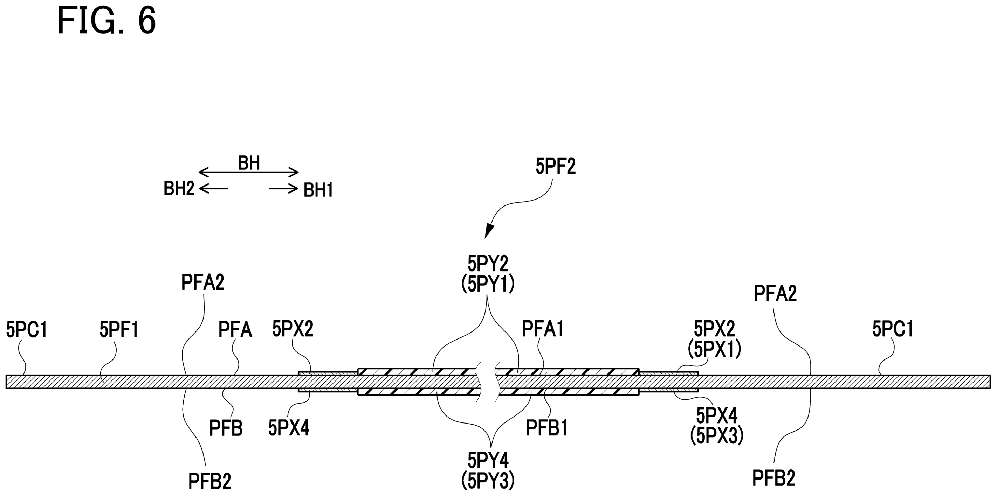

In the first bonding paste layer applying step S1, the bonding layer 5PY is formed by applying, or coating, a bonding-layer paste PY in a strip shape onto a width-direction central portion PFA1 of the first surface PFA of a strip-shaped positive electrode foil 5PF1 excluding side edge portions PFA2 on both sides in the width direction BH (i.e., a direction perpendicular to the drawing sheet of FIG. 5, the horizontal direction in FIG. 6). Specifically, firstly, the strip-shaped positive electrode foil 5PF1 is unwound from an unwinding machine 81. Then, using a first die-coater 101A, the bonding-layer paste PY is applied, at a predetermined thickness (in the present embodiment, a thickness of 6 µm after drying), onto the width-direction central portion PFA1 of the first surface PFA of the strip-shaped positive electrode foil 5PF1 being conveyed by conveying rolls 82. The bonding-layer paste PY is prepared by dissolving the above-mentioned thermoplastic resin in a solvent and further suspending conductive particles in a solvent.

In the first protective paste layer applying step S2, successively, the protective-layer paste PX is applied to parts of the side edge portions PFA2 located on both sides in the width direction BH on the first surface PFA of the strip-shaped positive electrode foil 5PF1, where the first bonding paste layer 5PY1 is not formed and thus the strip-shaped positive electrode foil 5PF1 is exposed. Specifically, using a second die-coater 102A, the protective-layer paste PX is applied onto outer sides BH1, BH2 of the strip-shaped first bonding paste layer SPY1, which is formed on the first surface PFA of the strip-shaped positive electrode foil 5PF1, in the width direction BH (the near side and the far side in FIG. 5, the right side and the left side in FIG. 6) to form first a pair of protective paste layers SPX1 each having a predetermined thickness (in the present embodiment, a thickness of 3 µm after drying) and extending in contact with and along the first bonding paste layer 5PY1. The bonding-layer paste PX is prepared by dissolving the above-mentioned thermoplastic resin in a solvent and further suspending insulating ceramic particles in a solvent.

In the first drying step S3, the first bonding paste layer 5PY1 and the first protective paste layers 5PX1 each formed as above are dried. Specifically, when passing through a drying booth 103, the solvents contained in both the paste layers 5PY1 and 5PX1 are volatilized (vaporized). Consequently, a first strip-shaped bonding layer 5PY2 and a pair of first strip-shaped insulating protective layers 5PX2 are formed on the first surface PFA of the strip-shaped positive electrode foil 5PF1 after drying.

In the second bonding paste layer applying step S4, as in the first bonding paste layer applying step S1, the bonding-layer paste PY is applied to a second surface PFB, which is a back side of the strip-shaped positive electrode foil 5PF1 opposite the first surface PFA, to form a second bonding paste layer 5PY3, which has a thickness of 6 µm after drying. Specifically, using the first die-coater 101A, the bonding-layer paste PY is applied in a strip shape onto a width-direction central portion PFB1 of the second surface PFB of the strip-shaped positive electrode foil SPF1.

In the second protective paste layer applying step S5, as in the first protective paste layer applying step S2, the protective-layer paste PX is applied to parts of the side edge portions PFB2 located on both sides in the width direction BH on the second surface PFB of the strip-shaped positive electrode foil 5PF1 to form a pair of second protective paste layers 5PX3, each having a thickness of 3 µm after drying.

In the second drying step S6, as in the first drying step S3, the second bonding paste layer 5PY3 and the second protective paste layers 5PX3 are dried through the drying booth 103. Consequently, a second strip-shaped bonding layer 5PY4 and a pair of second strip-shaped insulating protective layers 5PX4 are formed on the second surface PFB of the strip-shaped positive electrode foil 5PF1 after drying.

After this second drying step S6, as shown in FIG. 6, a resultant strip-shaped positive electrode foil 5PF2 with the bonding layers, which will be referred to as a "bonding-layer-coated strip-shaped positive electrode foil 5PF2", includes strip-shaped exposed portions 5PC1 where the strip-shaped positive electrode foil 5PF1 remains exposed in the side edge portions PFA2 on both sides in the width direction BH of the first surface PFA. Accordingly, the first strip-shaped bonding layer 5PY2 is formed on the width-direction central portion PFA1 of the first surface PFA, and the first strip-shaped insulating protective layers 5PX2, thinner than the first strip-shaped bonding layer 5PY2, are formed in a pair on the side edge portions PFA2 located on the outer sides BH1 and BH2 of the first surface PFA of the first strip-shaped bonding layer 5PY2 in the width direction BH. In contrast, the second strip-shaped bonding layer 5PY4 is formed on the width-direction central portion PFB1 of the second surface PFB, and the second strip-shaped insulating protective layers 5PX4, thinner than the second strip-shaped bonding layer 5PY4, are formed in a pair on the side edge portions PFB2 located on the outer sides BH1 and BH2 of the second surface PFB of the second strip-shaped bonding layer 5PY4 in the width direction BH.

The steps described above ensure that the first strip-shaped bonding layers 5PY2 and 5PY4 and the first strip-shaped insulating protective layers 5PX2 and 5PX4, thinner than those bonding layers 5PY2 and 5PY4, are formed on the strip-shaped positive electrode foil 5PF1.

In the following active-material sheet thermal press-bonding step S7, a first strip-shaped active material layer SPA2, which is formed separately, is placed overlapping the first strip-shaped bonding layer 5PY2 of the bonding-layer-coated strip-shaped positive electrode foil 5PF2 formed through the steps S1 to S6, and simultaneously, a second strip-shaped active material layer 5PA4, which is formed separately, is placed overlapping the second strip-shaped bonding layer 5PY4. Subsequently, the first strip-shaped active material layers SPA2 and 5PA4 are thermally press-bonded to the first strip-shaped bonding layers 5PY2 and 5PY4, respectively. Specifically, a known, strip-shaped, self-supported positive active material sheet SH (having a thickness of 80 µm, for example), which has been formed in advance and wound on a reel 83, is unwound via feeding rolls 84 and fed to cover the first strip-shaped bonding layer 5PY2 of the bonding-layer-coated strip-shaped positive electrode foil 5PF2. Further, a positive active material sheet SH identical to the above one is unwound from another reel 83 via feeding rolls 84 and fed to cover the second strip-shaped bonding layer 5PY4 of the bonding-layer-coated strip-shaped positive electrode foil SPF2. Then, using a roll press 104 including two rolls 104A and 104B, each heated to, for example, 80°C or higher, the positive active material sheets SH are press-bonded under heating to the first strip-shaped bonding layer 5PY2 and the second strip-shaped bonding layer 5PY4. Consequently, a strip-shaped positive electrode plate 5P1 is formed with the first strip-shaped active material layer 5PA2 provided on the first surface PFA of the strip-shaped positive electrode foil 5PF1 and the second strip-shaped active material layer SPA4 provided on the second surface PFB of the same foil 5PF1.

Meanwhile, in the active-material sheet thermal press-bonding step S7, for example, as shown in FIG. 3, the first strip-shaped active material layers SPA2 and SPA4 may be thermally press-bonded by the roll press 104 while the protruding portions (corresponding to the second portions PA2) of the first strip-shaped active material layers 5PA2 and 5PA4 are located above the first strip-shaped insulating protective layers 5PX2 and 5PX4. However, in the bonding-layer-coated strip-shaped positive electrode foil 5PF2 in the present embodiment, the first strip-shaped insulating protective layers 5PX2 formed on the first surface PFA are thinner than the first strip-shaped bonding layer 5PY2. Further, the second strip-shaped insulating protective layers 5PX4 formed on the second surface PFB are thinner than the second strip-shaped bonding layer 5PY4. Accordingly, the pressure exerted by the roll press 104 (i.e., the rolls 104A, 104B) is applied to the first portions PA1 of the first strip-shaped active material layers SPA2, SPA4, located on the first strip-shaped bonding layers 5PY2, 5PY4. This makes it possible to firmly bond the first strip-shaped bonding layers 5PY2, 5PY4 and the first portions PA1 of the first strip-shaped active material layers SPA2, 5PA4, located on the first strip-shaped bonding layers 5PY2, 5PY4, over their entire contact surfaces. Thus, the positive electrode plate 5P can be manufactured in which the first portions PA1 of the positive active material layers 5PA are bonded to the corresponding bonding layers 5PY and electrically connected to the positive current collecting foil 5PF.

Furthermore, in the active-material sheet thermal press-bonding step S7, using the roll press 104 composed of the two rolls 104A, 104B, the first strip-shaped active material layer SPA2 is press-bonded under heating onto the first strip-shaped bonding layer 5PY2 and simultaneously the second strip-shaped active material layer SPA4 is press-bonded under heating onto the second strip-shaped bonding layer 5PY4. Therefore, the first strip-shaped active material layer SPA2 and the second strip-shaped active material layer SPA4 can be simultaneously bonded, in one operation, to the first surface PFA and the second surface PFB of the bonding-layer-coated strip-shaped positive electrode foil 5PF2, respectively.

Subsequently, in the cutting step S8, the strip-shaped positive electrode plate 5P1 is cut to obtain the positive electrode plate 5P. Specifically, firstly, the strip-shaped positive electrode plate 5P1 is longitudinally cut at the center in the width direction using a first cutting cutter 106 into halves. Then, using a second cutting cutter 107, the halves are further cut into the positive electrode plates 5P each having a predetermined size in the longitudinal direction. Thus, the positive electrode plates 5P are completed.

The present disclosure is described in the foregoing embodiments, but is not limited to the above-described embodiments. The disclosure may be embodied in other specific forms without departing from the essential characteristics thereof.

For instance, the above-described embodiment exemplifies that the present disclosure is applied to the positive electrode plate of the electrode body. As alternatives, the present disclosure may be applied to the negative electrode plate instead of or in addition to the positive electrode plate. The above-described embodiment exemplifies that the protective paste layer coating step S2, S5 is performed by applying the protective-layer paste PX onto each outer side of and in contact with the first bonding paste layer 5PY1, 5PY3 formed on the strip-shaped positive electrode foil 5PF1 in the width direction. In other words, the positive electrode plate 5P including the insulating protective layer 5PX provided in contact with the bonding layer 5PY is shown as an example. However, the insulating protective layer has only to be provided between the electrode foil exposed portion and the bonding layer and extend along the bonding layer and the active material layer. Accordingly, the insulating protective layer may be formed by applying the protective-layer paste PX along the undried strip-shaped bonding layer formed on the strip-shaped electrode foil and leaving a gap without contacting the undried strip-shaped bonding layer.

Further, the foregoing embodiment exemplifies that the positive electrode plate 5P is provided with the positive active material layers 5PA each including the first portion PA1 located on the bonding layer 5PY and further the second portion PA2 located above the insulating protective layer 5PX (see FIG. 3). However, the active material layer does not always need to include the second portions. Further, the active-material sheet thermal press-bonding step S7 (a thermally press-bonding step) in the foregoing embodiment is performed to cover the first strip-shaped bonding layer 5PY2 with the first strip-shaped active material layer SPA2 (a first strip-shaped active material layer) and simultaneously cover the second strip-shaped bonding layer 5PY4 with the second strip-shaped active material layer SPA4 (a second strip-shaped active material layer). However, it is also possible to perform a process of covering the first strip-shaped bonding layer with the first strip-shaped active material layer SPA2 and then perform a process of covering the second strip-shaped bonding layer with the second strip-shaped active material layer SPA4. In the foregoing embodiment, moreover, the first bonding paste layer 5PY1 is applied to the strip-shaped positive electrode foil 5PF1 and, subsequently, the first protective paste layer 5PX1 is applied to the first bonding paste layer 5PY1. In other words, the first bonding paste layer 5PY1 is applied to the strip-shaped positive electrode foil 5PF1 prior to applying of the first protective paste layer 5PX1 to the first bonding paste layer SPY1. However, an inverse process may be adopted, in which the first protective paste layer 5PX1 is applied to the strip-shaped positive electrode foil 5PF1 and, subsequently, the first bonding paste layer 5PY1 is applied to the first protective paste layer SPX1. As an alternative, the first bonding paste layer 5PY1 and simultaneously the first protective paste layer 5PX1 may be applied to the strip-shaped positive electrode foil 5PF1.

### Reference Signs List

- 5P: Positive electrode plate (Electrode plate)
- 5P1: Strip-shaped positive electrode plate (Strip-shaped electrode plate)
- 5PA: Positive active material layer (Active material layer)
- 5PA2: First strip-shaped active material layer (Strip-shaped active material layer)
- 5PA4: Second strip-shaped active material layer (Strip-shaped active material layer)
- 5PC: Positive current collecting part (Electrode foil exposed portion)
- 5PC1: Strip-shaped exposed portion
- 5PF: Positive current collecting foil (Electrode foil)
- 5PF1: Strip-shaped positive electrode foil (Strip-shaped electrode foil)
- 5PF2: Bonding-layer-coated strip-shaped positive electrode foil (Bonding-layer-coated strip-shaped electrode foil)
- 5PX: Insulating protective layer
- 5PX1: First protective paste layer (Undried strip-shaped protective layer)
- 5PX2: First strip-shaped insulating protective layer (Strip-shaped insulating protective layer)
- 5PX3: Second protective paste layer (Undried strip-shaped protective layer)
- 5PX4: Second strip-shaped insulating protective layer (Strip-shaped insulating protective layer)
- 5PY: Bonding layer
- 5PY1: First bonding paste layer (Undried strip-shaped bonding layer)
- 5PY2: First strip-shaped bonding layer (Strip-shaped bonding layer)
- 5PY3: Second bonding paste layer (Undried strip-shaped bonding layer)
- 5PY4: Second strip-shaped bonding layer (Strip-shaped bonding layer)
- BH1: One outer side (in width direction)
- BH2: Other outer side (in width direction)
- PFA: First surface
- PFB: Second surface
- PX: Protective-layer paste
- PY: Bonding-layer paste
- S1: First bonding paste layer applying step
- S2: First protective paste layer applying step
- S3: First drying step
- S4: Second bonding paste layer applying step
- S5: Second protective paste layer coating step
- S6: Second drying step
- S7: Active-material sheet thermal press-bonding step
- SH: Positive active material sheet (Active material sheet)

## Claims

1. An electrode plate (5N, 5P) comprising:
an electrode foil (5NF, 5PF);
a bonding layer (5PY) having an electric conductivity and being provided on the electrode foil (5NF, 5PF);
an active material layer (5NA, 5PA) provided on the bonding layer (5PY) and bonded to the bonding layer (5PY); and
an insulating protective layer (5PX) provided on the electrode foil (5NF, 5PF) and extended along the bonding layer (5PY) and the active material layer (5NA, SPA) between an electrode-foil exposed portion (5PC) of the electrode foil (5NF, 5PF), where the electrode foil (5NF, 5PF) is exposed, and the bonding layer (5PY),
wherein the insulating protective layer (5PX) is thinner than the bonding layer (5PY).

2. The electrode plate (5N, 5P) according to claim 1, wherein the active material layer (5NA, 5PA) is formed of a self-supported active material sheet (SH).

3. A method for manufacturing the electrode plate (5N, 5P) set forth in claim 1 or 2, **characterized in that** the method comprises:
thermally press-bonding (S7) a strip-shaped active material layer (SPA2, 5PA4) while placing this strip-shaped active material layer (SPA2, SPA4) on a strip-shaped bonding layer (5PY2, 5PY4) of a bonding-layer-coated strip-shaped electrode foil (5PF2) to form a strip-shaped electrode plate (5P1) in which the strip-shaped active material layer (5PA2, 5PA4) is bonded to the strip-shaped bonding layer (5PY2, 5PY4),
the bonding-layer-coated strip-shaped electrode foil (5PF2) including:
the strip-shaped bonding layer (5PY2, 5PY4);
a pair of strip-shaped insulating protective layers (5PX2, 5PX4) formed on both outer sides (BH1, BH2) of the strip-shaped bonding layer (5PY2, 5PY4) in a width direction (BH) so that the pair of strip-shaped insulating protective layers is thinner than the strip-shaped bonding layer (5PY2, 5PY4), and
a strip-shaped exposed portion (5PC1) remains exposed in a strip shape on the strip-shaped electrode foil (5PF1).

4. The method according to claim 3 further comprising:
prior to thermally press-bonding (S7) the strip-shaped active material layer (SPA2, 5PA4),
applying (S1, S2, S4, S5) a bonding layer paste (PX) in a strip shape on the strip-shaped electrode foil (SPF1, 5PF2) to form an undried strip-shaped bonding layer (5PY1, 5PY3) that forms the strip-shaped bonding layer (5PY2, 5PY4) after drying, and simultaneously, or subsequently, or prior to applying a protective layer paste (PY) in a strip shape to form an undried strip-shaped protective layers (SPX1, 5PX3) that form the strip-shaped insulating protective layers (5PX2, 5PX4) after drying (S6), along the undried strip-shaped bonding layer (5PY1, 5PY3), while the strip-shaped exposed portion (5PC1) remains exposed, wherein the undried strip-shaped bonding layer (5PY1, 5PY3) and the undried strip-shaped protective layers (SPX1, 5PX3) are formed so that the strip-shaped insulating protective layers (5PX2, 5PX4) are thinner than the strip-shaped bonding layer (5PY2, 5PY4); and
drying (S3, S6) the undried strip-shaped bonding layer (5PY1, 5PY3) and the undried strip-shaped protective layers (5PX1, 5PX) to form the bonding-layer-coated strip-shaped electrode foil (5PF2) including the strip-shaped bonding layer (5PY2, 5PY4) and the strip-shaped insulating protective layers (5PX2, 5PX4) each being thinner than the strip-shaped bonding layer (5PY2, 5PY4).

5. The method according to claim 4, wherein
the bonding-layer-coated strip-shaped electrode foil (5PF2) includes:
a first strip-shaped bonding layer (5PY2) that is the strip-shaped bonding layer and first strip-shaped insulating protective layers (5PX2) that are the strip-shaped insulating protective layers, on a first surface (PFA) of the strip-shaped electrode foil (5PF1); and
a second strip-shaped bonding layer (5PY4) that is the strip-shaped bonding layer and second strip-shaped insulating protective layers (5PX4) that are the strip-shaped insulating protective layers, on a second surface (PFB) of the strip-shaped electrode foil (5PF1), which is a back surface opposite the first surface (PFA), and
thermally press-bonding (S7) the strip-shaped active material layer (5PA2, 5PA4) includes simultaneously thermally press-bonding (S7) the strip-shaped active material layer (5PA2, 5PA4) to form the strip-shaped electrode plate (5P1) by:
placing a first strip-shaped active material layer (5PA2) that is the strip-shaped active material layer onto the first strip-shaped bonding layer (5PY2) of the bonding-layer-coated strip-shaped electrode foil (5PF2),
placing a second strip-shaped active material layer (5PA4) that is the strip-shaped active material layer onto the second strip-shaped bonding layer (5PY4),
thermally press-bonding the first strip-shaped active material layer (5PA2) to the first strip-shaped bonding layer (5PY2), and simultaneously,
thermally press-bonding the second strip-shaped active material layer (5PA4) to the second strip-shaped bonding layer (SPY4),
so that the first strip-shaped active material layer (5PA2) is bonded to the first strip-shaped bonding layer (5PY2) and the second strip-shaped active material layer (5PA4) is bonded to the second strip-shaped bonding layer (5PY4).
